# EUROPEAN PATENT SPECIFICATION

(11) **EP 3 805 006 B1**
(45) Date of publication and mention of the grant of the patent: **13.12.2023**
(21) Application number: 20200405.7
(22) Date of filing: 06.10.2020
(51) Int. Cl.: G09F 3/02, G09F 3/00, B42D 25/387, B41M 3/14, B42D 25/378

(54) **PRINTED ARTICLE WITH ANTI-COUNTERFEITING FUNCTION**
GEDRUCKTER GEGENSTAND MIT FÄLSCHUNGSSCHUTZFUNKTION
ARTICLE IMPRIMÉ DOTÉ D'UNE FONCTION ANTI-CONTREFAÇON

(30) Priority: 07.10.2019 TW 108136304
(43) Date of publication of application: 14.04.2021
(73) Proprietor: Chance Line Industrial Co., Ltd., Siansi Township, Changhua County (TW)
(72) Inventor: YAO, Ming-Hsien, Changhua County (TW)
(74) Representative: Lang, Christian

(56) References cited:
- EP-A1- 1 036 665
- EP-A1- 1 457 349
- WO-A1-2004/098901
- WO-A1-2006/009873
- GB-A- 2 300 596
- US-A- 5 876 068
- US-A1- 2010 194 093
- US-B1- 6 361 079

## Description

### BACKGROUND OF THE INVENTION

### 1. Technical Field

The present invention relates to a printed article with an anti-counterfeiting function.

### 2. Description of Related Art

By showing patterns (texts and/or graphics) on clothing, the aesthetics of clothing can be enhanced. Particularly, garments with unique patterns for special purpose or limited edition are able to demonstrate and emphasize their speciality. Currently known methods of applying patterns onto garments include embroidery, sewing fabric or plastic sheets, and adhesive attachment with thermoprinting materials manufactured from plastic films etc.

As mentioned above, the use of a thermoprinting material formed into a pattern or having a pattern formed thereon for adhesively attaching or transferring onto garments is a known method. In addition, to ensure the manufacturing source, currently existing thermoprinting materials made from plastic films can be provided with the anti-counterfeiting function. Nevertheless, known thermoplastic materials with the anti-counterfeiting design are not concealed such that they are prone to be imitated, and the anti-counterfeiting function is greatly reduced.

Patent application publication EP 1 457 349 A1 discloses a printed article with an anti-counterfeit function having the features of the preamble of claim 1. Further articles having an anti-counterfeit function are known from patent application publications WO 2006/009873 A1, US 2010/0194093 A1 and from patent specification US 6 361 079 B1.

### SUMMARY OF THE INVENTION

An objective of the present invention is to provide a printed article in order to allow the printed article to have an anti-counterfeiting function, and its anti-counterfeit design has a concealing effect.

Another objective of the present invention is to provide an aforementioned printed article with an anti-counterfeiting function, and its anti-counterfeit design can be easily inspected and identified.

The present invention provides a printed article with an anti-counterfeiting function, comprising the features of claim 1. Further embodiments of the printed article according to the invention are subject-matter of the dependent claims. The printed article with an anti-counterfeiting function comprises:
a base layer;
a surface layer formed via an ink printing and printed onto the base layer; and
at least one anti-counterfeit label formed via an ink printing and disposed between the base layer and the surface layer;
when a light is shone onto the printed article, the anti-counterfeit label shows on the printed article.

Accordingly, the aforementioned printed article has an anti-counterfeit design such that when a light is shone onto the printed article, the anti-counterfeit label is able to show on the printed article to facilitate the authenticity identification. The anti-counterfeit label is concealed inside the printed article such that it cannot be detected easily. When no light is shone onto the printed article, the anti-counterfeit label would not show on the printed article.

The anti-counterfeit label is a fluorescent anti-counterfeit label and is formed via a fluorescent ink printing, such that when a light is shone onto the anti-counterfeit label, the anti-counterfeit label emits a fluorescent light on the printed article, and the shape and the profile of the anti-counterfeit label shows on the printed article.

The anti-counterfeit label is a projection type anti-counterfeit label, such that when a backlight is shone onto the anti-counterfeit material, the shape and the profile of the projection anti-counterfeit label shows on the printed article.

Preferably, the printed article includes the fluorescent anti-counterfeit label and the projection type anti-counterfeit label, and in the printed article, the two types of anti-counterfeit labels can be disposed at one identical location and stacked in a top-bottom manner, or can be disposed at different locations.

Preferably, the color of the projection type anti-counterfeit label is darker, and the color of the fluorescent anti-counterfeit label is lighter.

Preferably, the printed article is printed to form a pattern; the pattern is a text, a graphic, a symbol or a mark or a combination thereof.

Preferably, the profile of the anti-counterfeit label is a text, a graphic, a symbol or a mark or a combination thereof.

Preferably, the base layer is made of a plastic film, a paper film or sheet, or a fiber woven fabric.

### BRIEF DESCRIPTION OF THE DRAWINGS

The objectives, technical features and the technical effects of the present invention can be understood through the preferred embodiments described in the following and the accompanied drawings.
FIG. 1 is a front view of a printed article with an anti-counterfeiting function according to a first preferred embodiment of the present invention, and the printed article printed to form a pattern is illustrated;
FIG. 2 is a front view of another printed article with an anti-counterfeiting function according to a first preferred embodiment of the present invention, and the printed article printed to form another pattern is illustrated;
FIG. 3 is a cross sectional view taken along line 3-3 of FIG. 1;
FIG. 4 is a partially enlarged view of FIG. 1;
FIG. 5 is a perspective view showing the projection type anti-counterfeit label and the fluorescent anti-counterfeit label stacked in a top-bottom manner;
FIG. 6 showing a view similar to FIG. 3 and illustrating that the base layer of the printed article according to the first preferred embodiment of the present invention is made of another material;
FIG. 7 is a cross sectional view showing the printed article of the present invention adhesively attached onto a fabric;
FIG. 8 is an illustration showing an anti-counterfeit identification method of the printed article according to the first preferred embodiment of the present invention;
FIG. 9 is an illustration showing another anti-counterfeit identification method of the printed article according to the first preferred embodiment of the present invention;
FIG. 10 is a front view of the printed article according to the second preferred embodiment of the present invention;
FIG. 11 is a cross sectional view taken along line 11-11 of FIG. 10;
FIG. 12 is a cross sectional view of the printed article according to the third preferred embodiment of the present invention;
FIG. 13 is a front view of FIG. 12;
FIG. 14 is an actual photo of the printed article of the present invention, showing a state when the printed article is under a normal light environment;
FIG. 15 is an actual photo of the printed article of the present invention, showing a state of the front side of the printed article when an ultraviolet light is shown thereon; and
FIG. 16 is an actual photo of the printed article of the present invention, showing a state of the back side of the printed article when a light is shown thereon.

### DETAILED DESCRIPTION OF THE INVENTION

The dark color and light color described in the specification and the claims shall be based on the "value" of chromatics. The "value" described refers to the brightness of a color, and as the value is higher, the color is lighter. For example, the color of white refers to high value; on the contrary, a lower value means the color is darker, such as the color of black refers to low value.

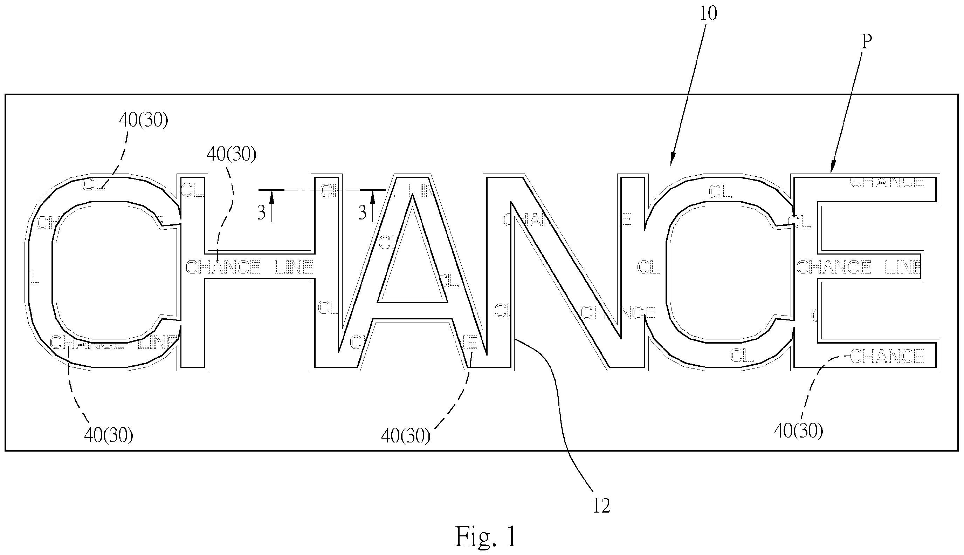

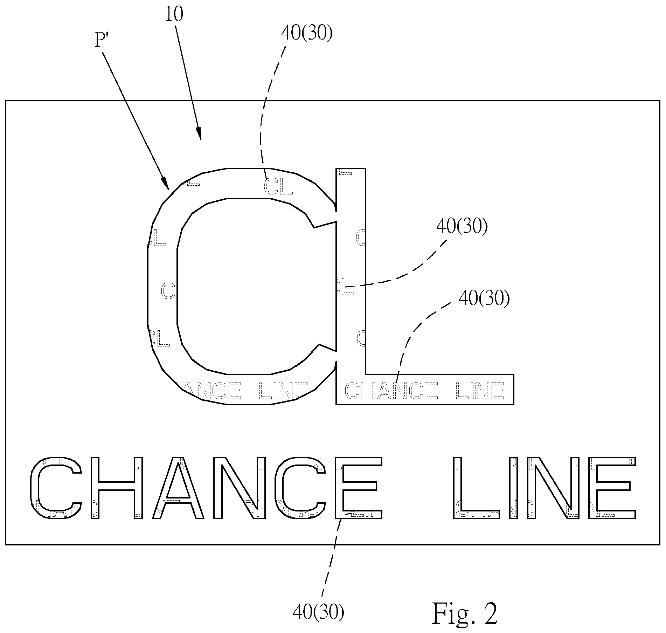

Please refer to FIG. 1 and FIG. 2, showing front views of printed articles 10 with an anti-counterfeiting function according to a first preferred embodiment of the present invention. In addition, the drawings also show that the two printed articles 10 can be printed to form different patterns P, P'. The pattern described in the specification can be any type of text, graphic, symbol, mark or a combination thereof, and it can have a regular or irregular profile. The pattern P of the printed article 10 in FIG. 1 uses the texts of CHANCE as an example for illustration, and the pattern P' of the printed article 10 in FIG. 2 uses the texts of the combination of CL and CHANCE LINE as an example for illustration. The following mainly uses the example of the printed article 10 and the pattern P shown in FIG. 1 for illustration. Identical components of the printed articles 10 in FIG. 1 and FIG. 2 are assigned with the same reference numerals; therefore, detailed description of the printed article shown in FIG. 2 is omitted hereafter.

To facilitate the understanding of the structure of the present invention, in FIG. 1, FIG. 2, FIG. 4 and FIG. 10, dashed lines are used to represent the anti-counterfeit labels 30, 40 disposed inside the printed article. When no light is shone onto the printed article, such anti-counterfeit labels 30 and 40 would not emerge to show on the printed articles.

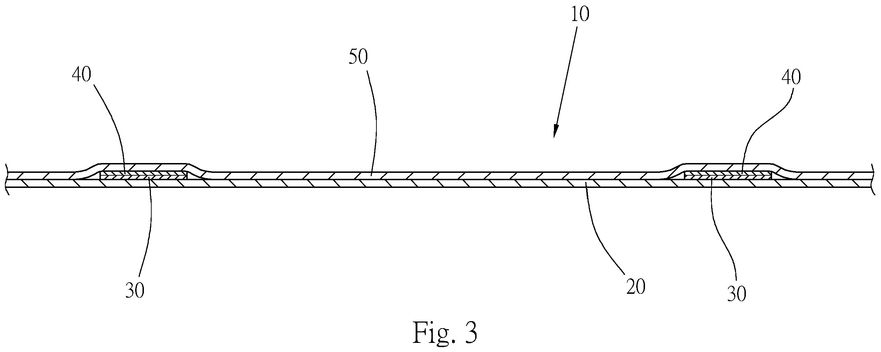

As shown in FIG. 3, in this embodiment, the printed article 10 is a layered material comprising a plurality of layers formed via an ink printing (such as PU or PVC ink), comprising: a base layer 20, at least one projection type anti-counterfeit label 30, at least one fluorescent anti-counterfeit label 40 and a surface layer 50. In this embodiment, the pattern P (as shown in FIG. 1) or P' (as shown in FIG. 2) printed on the printed article 10 can be a pattern demanded by a customer (consumer) or a pattern designed by a manufacturer. Since the pattern is formed via computer printing, such pattern can be customized, and an order of small quantity is acceptable, which can also be flexibly and readily changed to various patterns without the need to prepare printing molds, such that the cost of mold and template creation time can be significantly reduced.

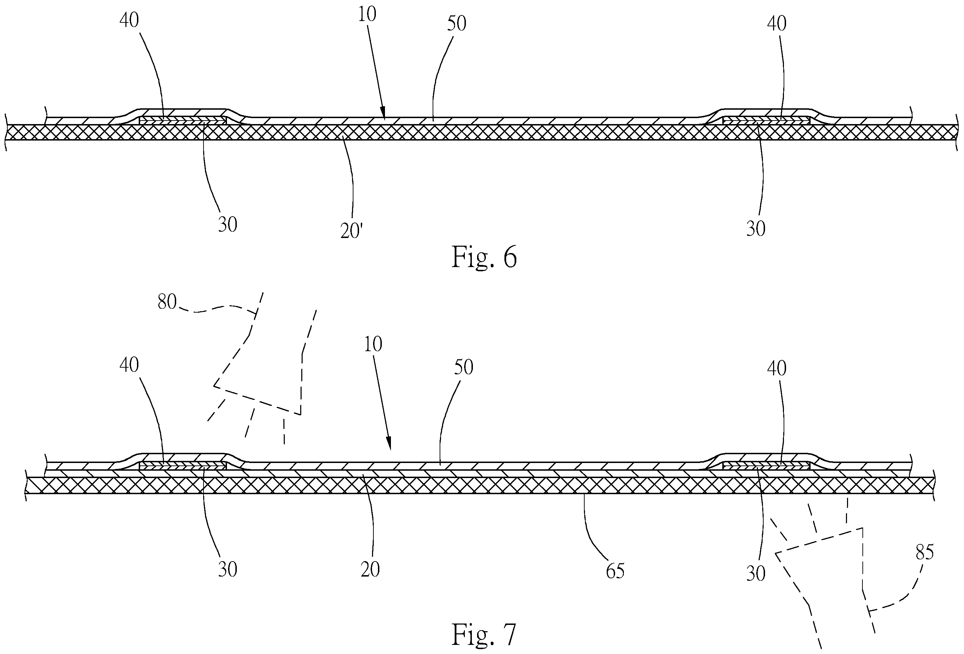

As shown in FIG. 3, the base layer 20 of the printed article 10 according to a preferred embodiment of the present invention can be a sheet or film made of a paper or plastic material such that the anti-counterfeit labels 30, 40 and the surface layer 50 can be printed thereon, and any material that can be provided for ink printing is acceptable. The base layer 20 shown in FIG. 3 is a plastic film made of a PU or PVC material, and one surface (the bottom surface without any anti-counterfeit label disposed thereon in FIG. 3) of the plastic film can have an adhesive agent, such as a hot-melt glue, in order to allow the base layer 20 to be adhesively attached onto an object with the hot-melt glue. The base layer can also be a paper coated with a hot-melt glue. Furthermore, as shown in FIG. 6, in this embodiment, the base layer 20' of the printed article 10 can be a fabric. The fabric can be made of natural fiber or artificial fiber weaving, such as cloth or other similar woven fabrics.

The base layer 20 shown in FIG. 3 is a plastic film, and a plastic film of light color or white color is preferred, and white color is most optimal.

In this embodiment, it includes a plurality of projection type anti-counterfeit labels (referred to as the "projection type label" or "anti-counterfeit label") 30 and a plurality of fluorescent anti-counterfeit labels (referred to as the "fluorescent label" or "anti-counterfeit label") 40. The quantities of the projection type anti-counterfeit labels 30 and the fluorescent anti-counterfeit labels 40 are preferably to be the same. The plurality of projection type anti-counterfeit labels 30 are formed via ink printing onto the base layer 20. The material of the projection type anti-counterfeit label 30 in this embodiment is a light-curing ink, and the light-curing ink includes a photosensitive resin and a photoinitiator; therefore, during the printing, irradiating a light on the ink, such as irradiating an ultraviolet light onto the ink in order to allow the resin of the light-curing ink to be harden and cured with the light irradiation. The plurality of projection type anti-counterfeit labels 30 are printed and distributed on a surface of the base layer 20, and the quantity and distribution status can be determined based on the actual needs without any limitation. In addition, the color of the projection type anti-counterfeit label 30 is not limited to any specific color but a dark color is preferred. For example, it can be formed via the ink printing in black or red color.

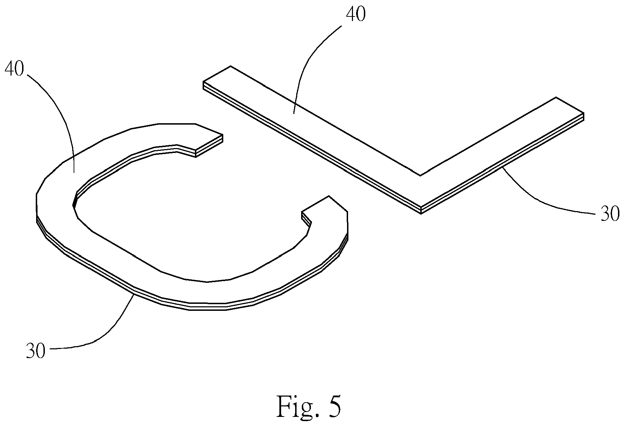

The plurality of fluorescent anti-counterfeit labels 40 are formed via fluorescent ink printing, and each fluorescent anti-counterfeit label 40 is printed onto a projection type anti-counterfeit label 30. The fluorescent ink used for creating the fluorescent anti-counterfeit label 40 is preferably to be a fluorescent ink of white color or light color, and a white ink is most optimal. Furthermore, the fluorescent ink used for printing the fluorescent anti-counterfeit label 40 can be an organic or inorganic ink. As shown in FIG. 5, each projection type anti-counterfeit label 30 and each fluorescent anti-counterfeit label 40 are printed at an identical location and stacked in a top-bottom manner. In addition, it is most optimal that the shape, profile and size of the projection type label 30 and the fluorescent label 40 stacked in a top-bottom manner are completely identical to each other.

It shall be noted that the projection type anti-counterfeit label 30 and the fluorescent anti-counterfeit label 40 are not necessary to be stacked in a top-bottom manner, the two types of anti-counterfeit labels 30 and 40 can be printed at different locations.

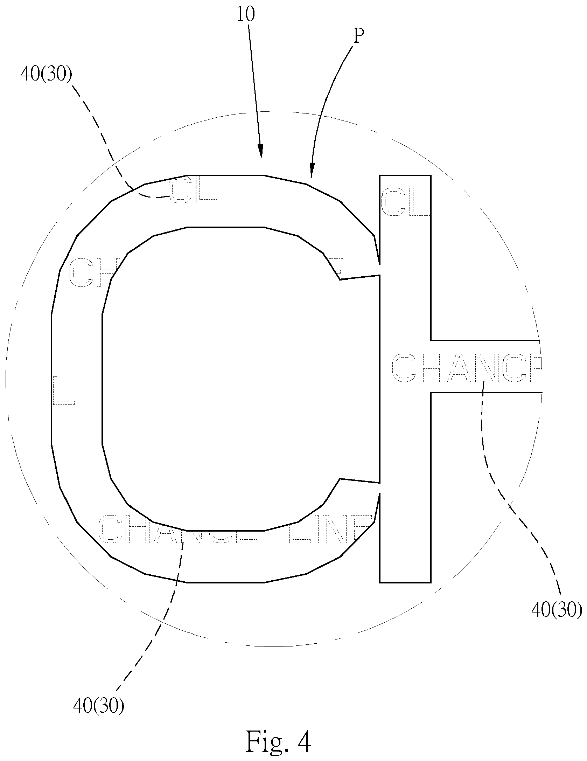

The outer appearance shape of the projection type anti-counterfeit label 30 and the fluorescent anti-counterfeit label 40 can be a text, a graphic, a symbol, a mark or a combination thereof. The anti-counterfeit labels 30, 40 in FIG. 1 are printed into the texts of CL and CHANCE LINE as an example for illustration. For implementation in practice, the pattern P can be printed to have the same profile as those of the anti-counterfeit label 30 and the anti-counterfeit label 40, such that the pattern P and the anti-counterfeit labels 30, 40 form the same text, graphic or mark. As the example shown in the accompanied drawings, the pattern P and the anti-counterfeit labels 30, 40 are CHANCE. In comparison to the size of the pattern P, the size of the anti-counterfeit labels 30, 40 is a reduced size, and its size is far smaller than the size of the pattern P. Furthermore, as shown in FIG. 4, to match with the profile of the pattern P, some anti-counterfeit labels 30, 40 (such as CHANCE LINE) are completely shown on the pattern P, whereas some anti-counterfeit labels are incompletely shown on the pattern P.

The surface layer 50 is printed onto the base layer 20 and the projection type anti-counterfeit labels 30 and the fluorescent anti-counterfeit labels 40, forming the outer surface of the printed article 10. The surface of the surface layer 50 can be printed to have different colors and various patterns, such as different patterns of characters, buildings, animals, landscape etc. and various colors. The color of the surface of the surface layer 50 can be monocolor, diverse colors (multiple colors) or gradient colors. The anti-counterfeit labels 30, 40 are disposed between the base layer 20 and the surface layer 50. As shown in FIG. 3, each projection anti-counterfeit label 30 is disposed at a top surface of the base layer 20, and each fluorescent anti-counterfeit label 40 is disposed underneath the surface layer 50, and the top surface of the projection type anti-counterfeit label 30. After the printed article 10 is manufactured, the base layer 20 and the surface layer 50 respectively form the back side and the front side of the printed article 10. The projection type anti-counterfeit labels 30 and the fluorescent anti-counterfeit labels 40 are disposed between the base layer 20 and the surface layer 50. In addition, the fluorescent anti-counterfeit label 40 separates the projection type anti-counterfeit labels 30 from the surface layer 50. With the separation by the fluorescent anti-counterfeit label 40, regardless the color of the projection anti-counterfeit label 30, even a dark color, it is prevented from showing at the surface layer 50. In other words, the color of the projection type label 30 does not show at the front side of the printed article 10. When the fluorescent anti-counterfeit label 40 uses a light color ink, in particular a white ink, it too does not show at the surface layer 50. Consequently, both the projection type and fluorescent anti-counterfeit inks 30, 40 can be concealed inside the printed article 10, and their colors do not show at the front side of the printed article.

The printed article 10 shown in FIG. 1 and FIG. 3 is formed by the anti-counterfeit labels 30, 40 and the surface layer 50 printed onto the base layer 20 of a plastic film material. After the printing of the printed article 10 is complete, the pattern P is cut on the printed article, and the thin line with the reference numeral 12 indicated in the drawing refers to the cutting mark for cutting the pattern P; or the printed article can be cut according to a pattern desired in order to obtain the printed article with the anti-counterfeiting function demanded. If the printed article 10 is created via the method illustrated in FIG. 6, i.e. printing the anti-counterfeit labels 30, 40 and the surface layer 50 onto a fabric 20' as a base layer, such as clothes for the fabric 20', then it is not necessary to perform the aforementioned cutting operation.

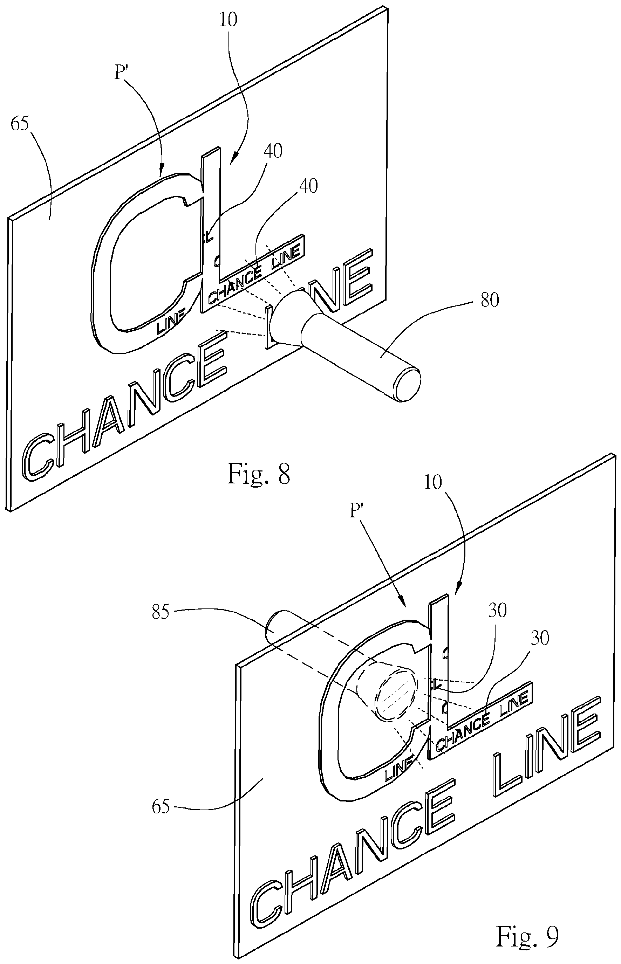

When the printed article 10 shown in FIG. 3 is adhesively attached onto an object, such as adhesively attached onto a clothing, a hot-press equipment is used to adhesively attach the printed article 10 onto a clothing 65, as shown in FIG. 7, and the printed article 10 is adhesively attached onto the clothing with the hot-melt glue applied onto the bottom surface of the base layer 20. Consequently, the pattern P or P' of the printed article 10 is shown on the clothing. FIG. 8 and FIG. 9 illustrate that the printed article of the pattern of P' is adhesively attached onto the surface of the clothing 65.

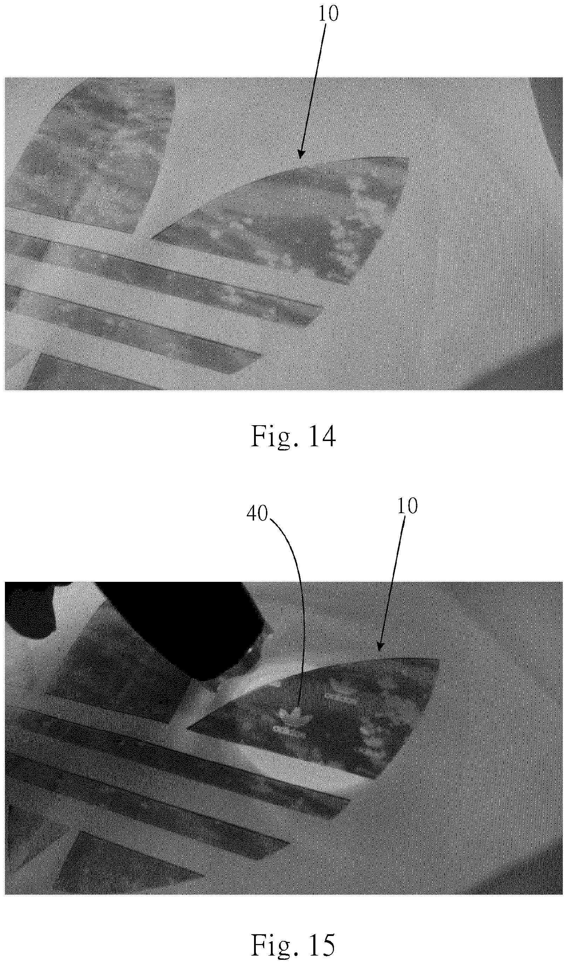

As previously mentioned, under an environment of general lighting, the outer appearance of the printed article 10 does not reveal the fluorescent anti-counterfeit label 40 and the projection type anti-counterfeit label 30. FIG. 14 shows an actual photo of the printed article 10 of the present invention, and it also illustrates example where the printed article is printed into the pattern of the adidas LOGO. Under the normal light, i.e. the environment of general lighting, the outer appearance of the printed article does not reveal the anti-counterfeit label.

The anti-counterfeit labels 30, 40 of the printed article 10 of the present invention is provided to achieve the effect of anti-counterfeit identification. As shown in FIG. 8, when an ultraviolet light (purple light) 80 is shone onto the front side (i.e. surface layer 50) of the printed article 10, the fluorescent anti-counterfeit label 40 shone/irradiated by the ultraviolet light is able to emit blue or purple fluorescent light, and people can then see the purple fluorescent light shown by the anti-counterfeit label 40 at the front side of the printed article 10, thereby achieving the effect of anti-counterfeit identification. Such method of shining light (ultraviolet light) onto the front side of the printed article 10 in order to allow the fluorescent anti-counterfeit label 40 to emit fluorescent light is one of the methods of the present invention for anti-counterfeit identification. According to the actual test of the inventor, the lighter the color of the surface layer 50, the better the fluorescent effect of the fluorescent anti-counterfeiting mark 40 after being shone/irradiated. Accordingly, when some areas of the surface layer 50 of the printed article 10 is of dark color (such as black) and some areas thereof have a lighter color, then the anti-counterfeit label 40 can be selectively created at locations of light colors on the printed article 10.

FIG. 15 shows an actual photo of the printed article of the present invention. The photo illustrates that an ultraviolet light is shone onto the front side of the printed article 10, and the fluorescent anti-counterfeit label 40 shone by the ultraviolet light emits fluorescent light. Consequently, the shape and profile of the anti-counterfeit label 40 is shown on the printed article.

FIG. 9 illustrates another anti-counterfeit identification method of the present invention. When a backlight source 85 is shone onto the printed article, i.e. when the light source shines light onto the printed article from the back side (i.e. from the base layer 20) of the printed article 10, the light penetrates through to reach the front side of the printed article 10. Since the projection type anti-counterfeit label 30 is embedded inside the printed article 10, the projection type anti-counterfeit label 30 and its profile can be seen from the front side of the printed article 10, which is similar to projecting the anti-counterfeit label 30 onto the front side of the printed article. Consequently, the authenticity of the printed article can be identified.

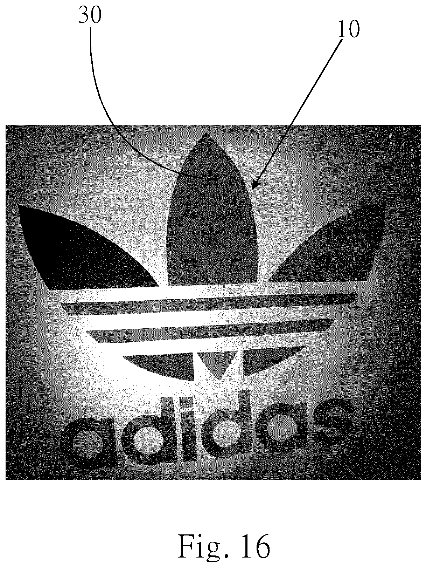

FIG. 16 shows an actual photo of the printed article of the present invention. The photo illustrates that a backlight is shone on the printed article 10, and the shape and profile of the projection type anti-counterfeit label 30 within the light projection range is projected and shown on the printed article.

If the color of some areas on the front side of the printed article 10 is too dark, i.e. if the color of the pattern printed at some areas of the surface of the surface layer 50 is dark brown, black or other dark color ink, when an ultraviolet light is shone onto the dark color area of the printed article via the method illustrated in FIG. 8, the fluorescent light emitted by the anti-counterfeit label 40 may not be visible at the dark color area. For such situation, the identification method of FIG. 9 can be used.

The anti-counterfeit labels 30, 40 are disposed between the base layer 20 and the surface layer 50 of the printed article 10. The anti-counterfeit labels 30, 40 slightly protrude outward on the front surface of the printed article.

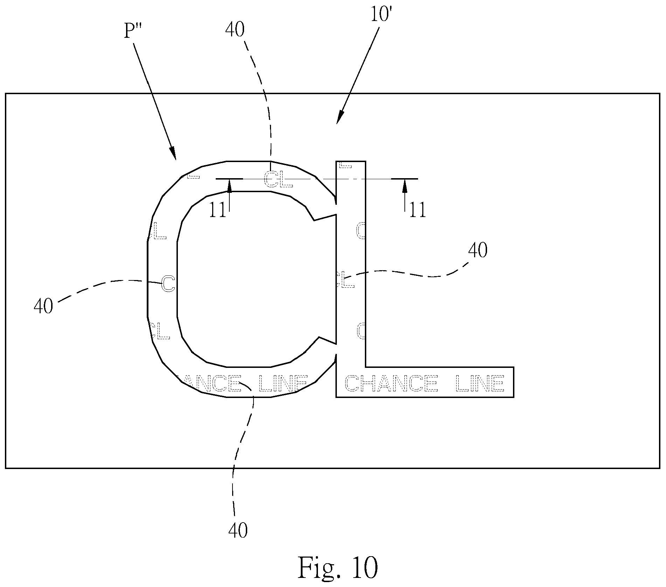

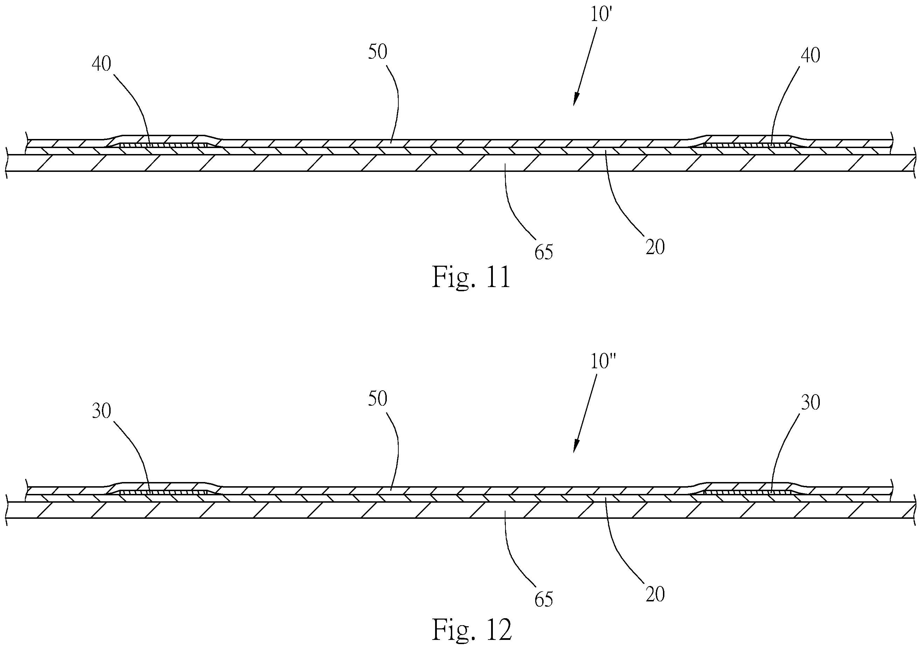

FIG 10 and FIG. 11 shows the front view and cross sectional view of the printed article 10' according to a second preferred embodiment of the present invention. The printed article 10' is also a multi-layer structure and is formed via an ink printing. In addition, the printed article 10' is printed to form a pattern P", such as CL. The pattern P" shown in the drawings is an example provided for illustration purpose and the present invention is not limited to such pattern only.

The printed article 10' comprises: a base layer 20, at least one or a plurality of fluorescent anti-counterfeit labels 40 and a surface layer 50; wherein: the base layer 20, the fluorescent anti-counterfeit label 40 and the surface layer 50 are identical to those of the first preferred embodiment, and they can be understood based on the description of the first preferred embodiment such that details thereof are omitted hereafter. As shown in the drawing, the plurality of anti-counterfeit labels 30 are printed into the texts of CL and CHANCE LINE as examples for illustration.

After the printed article 10' is manufactured, the base layer 20 and the surface layer 50 form the back side and the front side of the printed article respectively. The fluorescent anti-counterfeit labels 40 are disposed between the base layer 20 and the surface layer 50. Similar to the examples shown in FIG. 8 and FIG. 15, when an ultraviolet light is shone onto the front side of the printed article 10', the fluorescent anti-counterfeit label shone by the ultraviolet light then emits fluorescent light at the front side of the printed article.

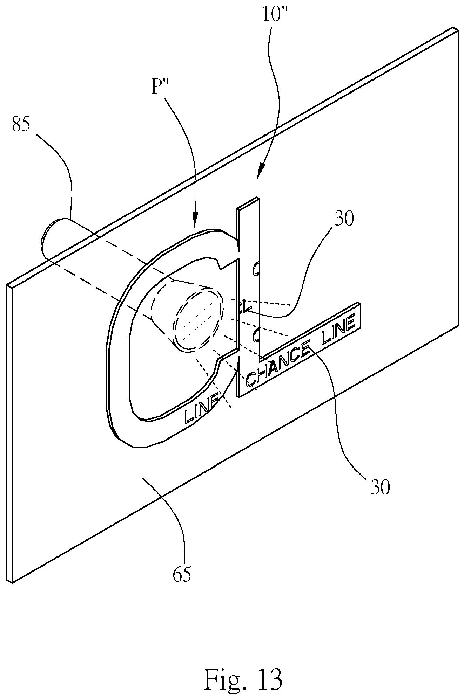

FIG. 12 and FIG. 13 show the cross sectional view and the perspective view of the printed article 10" according to a third preferred embodiment of the present invention. The printed article 10" is printed into the pattern P" as an example for illustration, and the pattern P" is an example provided for illustration purpose and the present invention is not limited to such pattern only. The printed article 10" comprises: a base layer 20, at least one or a plurality of projection type anti-counterfeit labels 30 and a surface layer 50; wherein: the base layer 20, the projection type label 30 and the surface layer 50 are identical to those of the first preferred embodiment, and they can be understood based on the description of the first preferred embodiment such that details thereof are omitted hereafter. The projection type anti-counterfeit label 30 is formed via the light-curing ink printing, and during the printing, light is irradiated thereon to cure the ink.

As shown in FIG. 13, when the authenticity of the printed article 10" is to be identified, a light source 85 of a backlight is shone onto the printed article from the back side of the printed article, and at the front side of the printing article 10", the anti-counterfeit label 30 within the range of the light projection can be seen to be projected onto the front side of the printed article. When the anti-counterfeit label projected is observed, the authenticity of the printed article can be identified. The projection presentation method of the anti-counterfeit label 30 is the same as the method illustrated in FIG. 9 and FIG. 16.

The printed article 10, 10', 10" of the present invention is equipped with the anti-counterfeit design and can be provided for authenticity identification. For the present invention, the projection type anti-counterfeit label 30 and/or the fluorescent anti-counterfeit label are embedded inside the printed article, and the concealed anti-counterfeit design is adopted such that the anti-counterfeit label is not exposed at the printed article such that it cannot be detected easily. By shining a light from the front side or the back side of the printed article 10, 10', 10", the anti-counterfeit label can be identified, making the inspection and anti-counterfeit identification process simple and convenient.

The printed article of the present invention is created via computer printing with ink, and it can be manufactured into various patterns and styles of anti-counterfeit labels, making it suitable to the customization demand of the modern society while satisfying the demands for flexible and diverse orders of small quantity. Furthermore, the creation speed of the printed article is fast, and the style of the anti-counterfeit label as well as the pattern of the printed article can be modified and changed swiftly, such that the surface of the printed article can be printed to have various patterns and colors. Moreover, the present invention does not require the use of molds adopted by the traditional method to create patterns; therefore, the mold cost can be reduced significantly.

## Claims

1. A printed article (10, 10', 10") with an anti-counterfeiting function, comprising:
a base layer (20),
a surface layer (50) formed via an ink printing and printed onto the base layer, and
at least one anti-counterfeit label (30, 40) formed via an ink printing and disposed between the base layer (20) and the surface layer (40),
whereby when a light is shone onto the printed article (10, 10', 10"), the anti-counterfeit label (30, 40) shows on the printed article (10, 10', 10"), wherein the at least one anti-counterfeit label (30, 40) is at least one fluorescent anti-counterfeit label (40) formed via a fluorescent ink printing and disposed between the base layer (20) and the surface layer (50),
whereby when a light is shone onto the printed article (10, 10', 10") and onto the fluorescent anti-counterfeit label (40), the fluorescent anti-counterfeit label (40) emits a fluorescent light on the printed article (10, 10', 10") **characterized by**
further comprising:
at least one projection type anti-counterfeit label (30, 40) formed via an ink printing and disposed between the base layer (20) and the surface layer (50), whereby when a light is shone onto the printed article (10, 10', 10") from the base layer (20) and onto the projection type anti-counterfeit label (30, 40), the at least one projection type anti-counterfeit label (30, 40) shows on a front side of the printed article (10, 10', 10").

2. The printed article (10, 10', 10") as claimed in claim 1, wherein the
fluorescent anti-counterfeit label (40) is formed via the ink printing of a white color or a light color.

3. The printed (10, 10', 10") article as claimed in claim 1, wherein the light shone onto the printed article (10, 10', 10") is an ultraviolet light.

4. The printed article (10, 10', 10") as claimed in claim 1, wherein the at least one fluorescent anti-counterfeit label (40) and the at least one projection type anti-counterfeit label (30, 40) are disposed at an identical location and stacked in a top-bottom manner.

5. The printed article (10, 10', 10") as claimed in claim 1 or 4, wherein a color of the projection type anti-counterfeit label (30, 40) is darker than a color of the fluorescent anti-counterfeit label (40).

6. The printed article (10, 10', 10") as claimed in claim 4, wherein the
fluorescent anti-counterfeit label (40) and the projection type anti-counterfeit label (30) stacked in a top-bottom manner have the same size and the same profile.

7. The printed article (10, 10', 10") as claimed in claim 1, wherein the at least one fluorescent anti-counterfeit label (40) and the at least one projection type anti-counterfeit label (30) are disposed at different locations.

8. The printed article (10, 10', 10") as claimed in claim 1, wherein
when a backlight is shone onto the printed article and is shone onto the projection type anti-counterfeit label (30), the at least one projection type anti-counterfeit label (30) shows on a front side of the printed article (10, 10', 10").

9. The printed article (10, 10', 10") as claimed in claim 1 or 8, wherein the at least one projection type anti-counterfeit label (30) is formable via a light-curing ink printing and curable by light that is shone thereon.

10. The printed article (10, 10', 10") as claimed in claim 1 or 8 or 9, wherein the projection type anti-counterfeit label (30) is formed via a dark ink printing.

11. The printed article (10, 10', 10") as claimed in any one of aforementioned claims, wherein the printed article (10, 10', 10") is printed to form a pattern; the pattern is a text, a graphic, a symbol or a mark or a combination thereof.

12. The printed article (10, 10', 10") as claimed in claim 11, wherein a profile of the anti-counterfeit label (30, 40) is same as the pattern of the printed article.

13. The printed article (10, 10', 10") as claimed in any one of aforementioned claims, wherein the base layer (20) is made of a plastic material, a paper film or sheet, or a fiber woven fabric.

14. The printed article (10, 10', 10") as claimed in any one of aforementioned claims, wherein a surface of the base layer (20) without the anti-counterfeit label (30, 40) printed thereon has an adhesive agent.

## Patentansprüche

1. Ein bedruckter Artikel (10, 10', 10") mit einer Anti-Fälschungsfunktion, umfassend
eine Basisschicht (20),
eine Oberflächenschicht (50), die durch einen Tintendruck gebildet und auf die Basisschicht gedruckt ist, und
mindestens ein Anti-Fälschungsetikett (30, 40), das durch einen Tintendruck gebildet und zwischen der Basisschicht (20) und der Oberflächenschicht (40) angeordnet ist,
wodurch, wenn ein Licht auf den bedruckten Artikel (10, 10', 10") fällt, das Anti-Fälschungsetikett (30, 40) auf dem bedruckten Artikel (10, 10', 10") erscheint, wobei das mindestens eine Anti-Fälschungsetikett (30, 40) mindestens ein fluoreszierendes Anti-Fälschungsetikett (40) ist, das durch einen fluoreszierenden Tintendruck gebildet und zwischen der Basisschicht (20) und der Oberflächenschicht (50) angeordnet ist,
wodurch, wenn Licht auf den bedruckten Artikel (10, 10', 10") und auf das fluoreszierende Anit-Fälschungsetikett (40) fällt, das fluoreszierende Anti-Fälschungsetikett (40) ein fluoreszierendes Licht auf den bedruckten Artikel (10, 10', 10") emittiert,
**gekennzeichnet dadurch, dass**
es ferner umfasst:
mindestens ein Projektionstyp-Anti-Fälschungsetikett (30, 40), das durch Tintendruck gebildet und zwischen der Basisschicht (20) und der Oberflächenschicht (50) angeordnet ist, wodurch, wenn ein Licht von der Basisschicht (20) auf den bedruckten Artikel (10, 10', 10") und auf das Projektionstyp-Anti-Fälschungsetikett (30, 40) fällt, das mindestens eine Projektionstyp-Anti-Fälschungsetikett (30, 40) auf einer Vorderseite des bedruckten Artikels (10, 10', 10") erscheint.

2. Der bedruckte Artikel (10, 10', 10") nach Anspruch 1, wobei das fluoreszierende Anti-Fälschungsetikett (40) durch den Tintendruck einer weißen Farbe oder einer hellen Farbe gebildet ist.

3. Der bedruckte Artikel (10, 10', 10") nach Anspruch 1, wobei das auf den bedruckten Artikel (10, 10', 10") fallende Licht ein ultraviolettes Licht ist.

4. Der bedruckte Artikel (10, 10', 10") nach Anspruch 1, wobei das mindestens eine fluoreszierende Anti-Fälschungsetikett (40) und das mindestens eine Projektionstyp-Anti-Fälschungsetikett (30, 40) an einer identischen Stelle angeordnet und von oben nach unten gestapelt sind.

5. Der bedruckte Artikel (10, 10', 10") nach Anspruch 1 oder 4, wobei eine Farbe des Projektionstyp-Anti-Fälschungsetiketts (30, 40) dunkler ist als eine Farbe des fluoreszierenden Anti-Fälschungsetiketts (40).

6. Der bedruckte Artikel (10, 10', 10") nach Anspruch 4, wobei das fluoreszierende Anti-Fälschungsetikett (40) und das Projektionstyp-Anti-Fälschungsetikett (30), die von oben nach unten gestapelt sind, die gleiche Größe und das gleiche Profil haben.

7. Der bedruckte Artikel (10, 10', 10") nach Anspruch 1, wobei das mindestens eine fluoreszierende Anti-Fälschungsetikett (40) und das mindestens eine Projektionstyp-Anti-Fälschungsetikett (30) an unterschiedlichen Stellen angeordnet sind.

8. Der bedruckte Artikel (10, 10', 10") nach Anspruch 1, wobei, wenn ein Hintergrundlicht auf den bedruckten Artikel fällt und auf das Projektionstyp-Anti-Fälschungsetikett (30) fällt, das mindestens eine Projektionstyp-Anti-Fälschungsetikett (30) auf einer Vorderseite des bedruckten Artikels (10, 10', 10") erscheint.

9. Der bedruckte Artikel (10, 10', 10") nach Anspruch 1 oder 8, wobei das mindestens eine Projektionstyp-Anti-Fälschungsetikett (30) mittels eines lichthärtenden Tintendrucks formbar und durch darauf fallendes Licht härtbar ist.

10. Der bedruckte Artikel (10, 10', 10") nach Anspruch 1 oder 8 oder 9, wobei das Projektionstyp-Anti-Fälschungsetikett (30) mittels eines dunklen Tintendrucks gebildet ist.

11. Der bedruckte Artikel (10, 10', 10") nach einem der vorgenannten Ansprüche, wobei der bedruckte Artikel (10, 10', 10") zur Bildung eines Musters bedruckt ist, wobei das Muster ein Text, eine Grafik, ein Symbol oder eine Marke oder eine Kombination davon ist.

12. Der bedruckte Artikel (10, 10', 10") nach Anspruch 11, wobei ein Profil des Anti-Fälschungsetiketts (30, 40) dem Muster des bedruckten Artikels gleich ist.

13. Der bedruckte Artikel (10, 10', 10") nach einem der vorgenannten Ansprüche, wobei die Basisschicht (20) aus einem Kunststoffmaterial, einer Papierfolie oder einem Papierbogen oder einem Fasergewebe besteht.

14. Der bedruckte Artikel (10, 10', 10") nach einem der vorstehenden Ansprüche, wobei eine Oberfläche der Basisschicht (20) ohne das darauf gedruckte Anti-Fälschungsetikett (30, 40) ein Haftmittel aufweist.

## Revendications

1. Article imprimé (10, 10', 10") avec une fonction anti-contrefaçon, comprenant :
une couche de base (20),
une couche de surface (50) formée via une impression à l'encre et imprimée sur la couche de base, et
au moins un marquage anti-contrefaçon (30, 40) formé via une impression à l'encre et disposé entre la couche de base (20) et la couche de surface (40),
selon lequel lorsqu'une lumière éclaire l'article imprimé (10, 10', 10"), le marquage anti-contrefaçon (30, 40) apparaît sur l'article imprimé (10, 10', 10"), dans lequel le au moins un marquage anti-contrefaçon (30, 40) est au moins un marquage anti-contrefaçon fluorescent (40) formé via une impression à l'encre fluorescente et disposé entre la couche de base (20) et la couche de surface (50),
selon lequel lorsqu'une lumière éclaire l'article imprimé (10, 10', 10") et le marquage anti-contrefaçon fluorescent (40), le marquage anti-contrefaçon fluorescent (40) émet une lumière fluorescente sur l'article imprimé (10, 10', 10")
**caractérisé en ce que**
il comprend en outre :
au moins un marquage anti-contrefaçon de type projection (30, 40) formé via une impression à l'encre et disposé entre la couche de base (20) et la couche de surface (50), selon lequel lorsqu'une lumière éclaire l'article imprimé (10, 10', 10") depuis la couche de base (20) et le marquage anti-contrefaçon de type projection (30, 40), le au moins un marquage anti-contrefaçon de type projection (30, 40) apparaît sur une face avant de l'article imprimé (10, 10', 10").

2. Article imprimé (10, 10', 10") selon la revendication 1, dans lequel le marquage anti-contrefaçon fluorescent (40) est formé via l'impression à l'encre d'une couleur blanche ou d'une couleur claire.

3. Article imprimé (10, 10', 10") selon la revendication 1, dans lequel la lumière éclairant l'article imprimé (10, 10', 10") est une lumière ultraviolette.

4. Article imprimé (10, 10', 10") selon la revendication 1, dans lequel le au moins un marquage anti-contrefaçon fluorescent (40) et le au moins un marquage anti-contrefaçon de type projection (30, 40) sont disposés à un emplacement identique et superposés d'une manière dessus-dessous.

5. Article imprimé (10, 10', 10") selon la revendication 1 ou 4, dans lequel une couleur du marquage anti-contrefaçon de type projection (30, 40) est plus sombre qu'une couleur du marquage anti-contrefaçon fluorescent (40).

6. Article imprimé (10, 10', 10") selon la revendication 4, dans lequel le marquage anti-contrefaçon fluorescent (40) et le marquage anti-contrefaçon de type projection (30) superposés d'une manière dessus-dessous présentent la même taille et le même profil.

7. Article imprimé (10, 10', 10") selon la revendication 1, dans lequel le au moins un marquage anti-contrefaçon fluorescent (40) et le au moins un marquage anti-contrefaçon de type projection (30) sont disposés à différents emplacements.

8. Article imprimé (10, 10', 10") selon la revendication 1, dans lequel lorsqu'un rétroéclairage éclaire l'article imprimé et éclaire le marquage anti-contrefaçon de type projection (30), le au moins un marquage anti-contrefaçon de type projection (30) apparaît sur une face avant de l'article imprimé (10, 10', 10").

9. Article imprimé (10, 10', 10") selon la revendication 1 ou 8, dans lequel le au moins un marquage anti-contrefaçon de type projection (30) peut être formé via une impression à l'encre séchant à la lumière et pouvant sécher grâce à la lumière qui l'éclaire.

10. Article imprimé (10, 10', 10") selon la revendication 1 ou 8 ou 9, dans lequel le marquage anti-contrefaçon de type projection (30) est formé via une impression à l'encre sombre.

11. Article imprimé (10, 10', 10") selon l'une quelconque des revendications précédentes, dans lequel l'article imprimé (10, 10', 10") est imprimé pour former un motif; le motif est un texte, une image, un symbole ou une marque ou une combinaison de ceux-ci.

12. Article imprimé (10, 10', 10") selon la revendication 11, dans lequel un profil du marquage anti-contrefaçon (30, 40) est le même que le motif de l'article imprimé.

13. Article imprimé (10, 10', 10") selon l'une quelconque des revendications précédentes, dans lequel la couche de base (20) est faite d'une matière plastique, d'un film ou d'une feuille de papier, ou d'un tissu de fibres tissées.

14. Article imprimé (10, 10', 10") selon l'une quelconque des revendications précédentes, dans lequel une surface de la couche de base (20) sans le marquage anti-contrefaçon (30, 40) imprimé sur celle-ci présente un agent adhésif.
